# EUROPÄISCHE PATENTSCHRIFT

(11) **EP 1 179 125 B1**
(45) Veröffentlichungstag und Bekanntmachung des Hinweises auf die Patenterteilung: **03.11.2004**
(21) Anmeldenummer: 00925229.7
(22) Anmeldetag: 20.04.2000
(51) Int. Cl.: F01N 3/08, F01N 3/28

(54) **VORRICHTUNG ZUM REDUZIEREN VON SCHÄDLICHEN BESTANDTEILEN IM ABGAS EINER BRENNKRAFTMASCHINE, INSBESONDERE EINER DIESEL-BRENNKRAFTMASCHINE**
METHOD FOR REDUCING HARMFUL COMPONENTS IN THE EXHAUST GAS OF AN INTERNAL COMBUSTION ENGINE, ESPECIALLY A DIESEL-INTERNAL COMBUSTION ENGINE
DISPOSITIF SERVANT A LIMITER LA QUANTITE DE COMPOSANTS NOCIFS PRESENTS DANS LES GAZ D'ECHAPPEMENT D'UN MOTEUR A COMBUSTION INTERNE, EN PARTICULIER D'UN MOTEUR A COMBUSTION INTERNE DIESEL

(30) Priorität: 12.05.1999 DE 19921974
(43) Veröffentlichungstag der Anmeldung: 13.02.2002
(73) Patentinhaber: Volkswagen Aktiengesellschaft, 38436 Wolfsburg (DE)
(72) Erfinder: ENGELER, Werner, 38527 Meine (DE); BECHMANN, Olaf, 30167 Hannover (DE); DORE, Pascal, 38518 Gifhorn (DE); HOHLSTEIN, Günter, 38176 Wendeburg (DE); KAHMANN, Gerhard, 38302 Wolfenbüttel (DE); DÜSTERDIEK, Thorsten, 30163 Hannover (DE)
(74) Vertreter: Meyer, Enno, Dr.
(86) Internationale Anmeldenummer: PCT/EP2000/003595
(87) Internationale Veröffentlichungsnummer: WO 2000/070202

(56) Entgegenhaltungen:
- EP-A- 0 758 713
- EP-A- 0 905 354
- DE-A- 3 731 889
- US-A- 5 089 237
- US-A- 5 340 548
- US-A- 5 758 496

## Beschreibung

Die Erfindung bezieht sich auf eine Vorrichtung nach dem Oberbegriff des Anspruchs 1.

Im Zuge der Entwicklung von Vorrichtungen zum Reduzieren von schädlichen Bestandteilen im Abgas einer Brennkraftmaschine, insbesondere einer Diesel-Brennkraftmaschine, sind bereits eine Vielzahl Maßnahmen vorgeschlagen und bekannt geworden.

Zur Beseitigung von Partikeln aus dem Abgas einer Diesel-Brennkraftmaschine wird ein in der Abgasleitung eingebauter Partikelfilter verwendet. Jedoch neigt ein Partikelfilter dazu, sich mit der Zeit zuzusetzen, und er muß regeneriert werden, was durch ein Frei- bzw. Abbrennen der Partikel am filter erfolgen kann. Dazu ist eine Abbrenntemperatur ab etwa 550°C notwendig. Diese Temperaturen werden unter normalen Betriebsbedingungen nicht erreicht.

Um das Abbrennen der Partikel bei niedrigeren Temperaturen zu ermöglichen, ist bereits vorgeschlagen worden, Additive im Abgas zu verwenden, mit denen die Zündtemperatur der Partikel gesenkt werden kann, jedoch ist eine Senkung der Zündtemperatur in den benötigten Temperaturbereich im normalen Funktionsbetrieb der Brennkraftmaschine nicht möglich. Ein weiterer Nachteil des plötzlichen Abbrennens der am Partikelfilter gesammelten Partikel führt auch zu einer starken Beanspruchung des Filtermaterials.

Es ist daher ein kontinuierliches Regenerieren des Partikelfilters durch Abbrennen wünschenswert. Hierzu ist bereits vorgeschlagen worden, dem Partikelfilter in der Abgasleitung einen Oxidationskatalysator vorzuschalten, der aus dem im Abgas enthaltenen NO → NO₂ produziert, mit dem die Partikel im wesentlichen kontinuierlich oxidiert werden. Ein solches System ist unter der Bezeichnung CRT-System an sich bekannt. Ein Nachteil dieses Systems ist, das für die Regeneration des Partikelfilters verhältnismäßig große Mengen Stickoxide benötigt werden, die selbst ein Schadstoff sind und gesetzlichen Limitationen unterliegen.

EP-A-0 758 713 offenbart eine Vorrichtung zum Reinigen des Abgases einer Brennkraftmaschine, insbesondere eines Dieselmotors, bei der in Strömungsrichtung des Abgases ein Oxidationskatalysator, ein Partikelfilter und ein NOx-Absorber jeweils als separate Einheiten angeordnet sind.

EP-A-0 862941 beschreibt eine Vorrichtung zum Reduzieren von schädlichen Bestandtellen im Abgas einer Brennkraftmaschine bei der der NOx-Speicherkatalysator in den Partikelfliter integriert ist und durch eine NOx-Speicherbeschichtung gebildet wird.

Der Erfindung liegt die Aufgabe zugrunde, eine Vorrichtung der eingangs angegebenen Art so auszugestalten, daß bei Gewährleistung einer kontinuierlichen Regeneration des Partikeltilters der Anteil der Stickoxide im Abgas niedrig gehalten werden kann.

Diese Aufgabe wird durch die Merkmale des Anspruchs 1 gelöst. Vorteilhafte Weiterbildungen der Erfindung sind Gegenstand der Unteransprüche.

Nachfolgend werden bevorzugte Ausführungsbeispiele der Erfindung anhand von vereinfachten Zeichnungen näher erläutert. Es zeigen
- Fig. 1: eine nicht zur Erfindung gehönende Vorrichtung zur Reduzierung von schädlichen Bestandteilen im Abgas einer Brennkraftmaschine;
- Fig. 2: die Vorrichtung nach Fig. 1 in abgewandelter Ausgestaltung;
- Fig. 3: die erfingdungsgemäße Vorrichtung;
- Fig. 4: die Vorrichtung nach Fig. 3 in weiter abgewandelter Ausgestaltung;
- Fig. 5: die Vorrichtung nach Fig. 3 in weiter abgewandelter Ausgestaltung; und
- Fig. 6: eine schematische Darstellung einer Filterbeschichtung eines Filterelements für eine Variante A und eine Variante B.

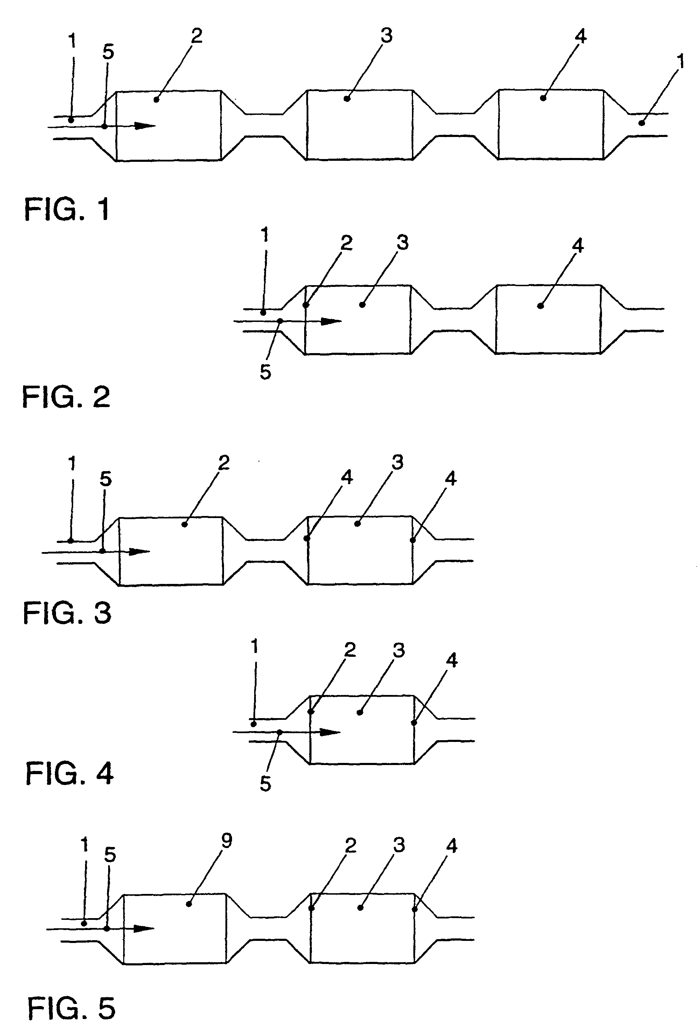

In Fig. 1 ist die Abgasleitung 1 einer nicht dargestellten Brennkraftmaschine, insbesondere einer Diesel-Brennkraftmaschine, dargestellt, wobei In der Abgaslettung 1 ein Oxydationskatalysator 2, ein Partikelfilter 3 und ein NOx-Speicherkatalysator 4 in der Strömungsrichtung 5 hintereinander angeordnet sind, so daß das von der Brennkraftmaschine ausgestoßene Abgas zunächst zum Oxydationskatalysator 2, dann zum Partikelfilter 3 und dann zum NOx-Speicherkatalysator 4 strömt, bevor es die Abgasleitung 1 verläßt. Die Katalysatoren 2, 4 und der Partikelfilter 3 sind jeweils in einem Gehäuse 6, 7, 8 angeordnet, die jeweils beiderseits mit der Abgasleitung 1 verbunden sind, so daß das Abgas die Gehäuse 6, 7, 8 und die Katalysatoren 2, 4 sowie das Partikelfilter 3 im Funktionsbetrieb durchströmen können. Zwischen den Gehäusen 6, 7, 8 kann jeweils ein Abstand vorgesehen sein, der von Abschnitten der Abgasleitung 1 überbrückt wird.

Die Funktionsweise dieser Vorrichtung zum Reinigen des Abgases einer Brennkraftmaschine, insbesondere einer Diesel-Brennkrattmaschine, ist folgende, im Funktionsbetrieb strömt das Abgas durch den Oxydationskatalysator 2, dann durch den Partikelfilter 3 und anschließend durch den NOx-Speicherkatalysator 4. Dabei wird Im Oxydationskatalysator 3 CO und HC umgesetzt sowie NO₂ erzeugt. Im Partikelfilter 3 werden die gesammelten Partikel kontinuierlich abgebaut, wobei sie abbrennen und der Partikelfilter 3 sich gleichzeitig regeneriert. Im NOx-Speicherkatalysator 4 wird NOx adsorbiert, wobei es bei einer fetten Abgaszusammensetzung, die von der Brennkraftmaschine eingestellt wird, durch eine 3-Wegebeschichtung reduziert wird. Diese Maßnahmen, d.h. das Anfetten, erfolgen während der Durchströmung mit dem Abgas, beispielsweise in vorbestimmten zeitlichen Abständen.

Beim Beispiel nach Fig. 2, bei dem gleiche oder vergleichbare Teile mit gleichen Bezugszeichen versehen sind, ist der Oxydationskatalysator 2 in Kombination mit dem Partikelfilter 3 angeordnet, z.B. an der Einlaßseite angeordnet. Der Oxydationskatalysator 2 kann auch in den einlaßseitigen Bereich des Partikelfilters 3 integriert sein, z.B. durch eine Oxydationskatalysator-Beschichtung der Einlaßseite oder des einlaßseitigen Bereichs des Partikelfilters. Hierdurch wird eine kompakte und kleine Bauweise erreicht, wobei der vorhandene Bauraum eingespart oder effektiver ausgenutzt wird.

Beim Ausführungsbeispiel nach Fig. 3, bei dem gleiche oder vergleichbare Teile mit gleichen Bezugszeichen versehen sind, ist der NOx-Speicherkatalysator 4 in Kombination mit dem Partikelfilter 3 an dessen Auslaßseite und/oder Einlaßseite angeordnet oder in den Partikelfilter 3 integriert. Hierbei kann der NOx-Speicherkatalysator 4 durch eine NOx-Speicherkatalysator-Beschichtung gebildet sein, mit der die Auslaßseite und/oder die Einlaßseite und/oder der Eingangsbereich und/oder Ausgangsbereich oder der Strömungsdurchgang des Partikelfilters 3 beschichtet ist.

Eine besonders kompakte Bauweise wird erreicht, wenn der Oxydationskatalysator 2 und der NOx-Speicherkatalysator 4 in Kombination mit dem Partikelfilter 3 angeordnet sind, wie es Fig. 4 zeigt, in der gleiche oder vergleichbare Bauteile ebenfalls mit dem gleichen Bezugszeichen bezeichnet sind. Bei dieser Anordnung bzw. Ausgestaltung kann der Oxydationskatalysator 2 an der Einlaßseite angeordnet oder im Bereich der Einlaßseite in den Partikelfilter integriert sein, und der NOx-Speicherkatalysator 4 kann an der Auslaßseite des Partikelfilters 3 oder in dessen auslaßseitigen Bereichs integriert sein. In jeweils beiden Fällen kann der Oxydationskatalysator 2 durch eine Oxydationskatalysator-Beschichtung gebildet sein, mit der der Partikelfilter 3 einlaßseitig oder im Bereich seiner Einlaßseite beschichtet ist, und der NOx-Speicherkatalysator 4 kann durch eine NOx-Speicherkatalysator-Beschichtung gebildet sein, mit der der Partikelfilter 3 auslaßseitig oder im Bereich seiner Auslaßseite beschichtet ist.

Da im Kraftstoff enthaltender Schwefel für einen Oxydationskatalysator 2 und einen NOₓ-Speicherkatalysator 4 schädlich ist, ist es bei allen vorbeschriebenen und noch zu beschreibenden Ausführungsbeispielen vorteilhaft, der Vorrichtung zum Reinigen des Abgases eine Schwefel-Verminderungsvorrichtung zuzuordnen, die in der Strömungsrichtung 5 vor dem Oxydationskatalysator 2 anzuordnen ist. Eine solche vorgeschaltete Schwefel-Verminderungsvorrichtung kann durch eine Schwefelfalle 9 gebildet sein, mit der in an sich bekannter Weise SOx adsorbiert wird, wie dies in der Fig. 5 dargestellt ist. Eine vorgeschaltete Schwefel-Verminderungsvorrichtung, insbesondere eine Schwefelfalle 9, kann auch bei allen anderen Ausführungsbeispielen vorgeschaltet sein, was nicht dargestellt ist.

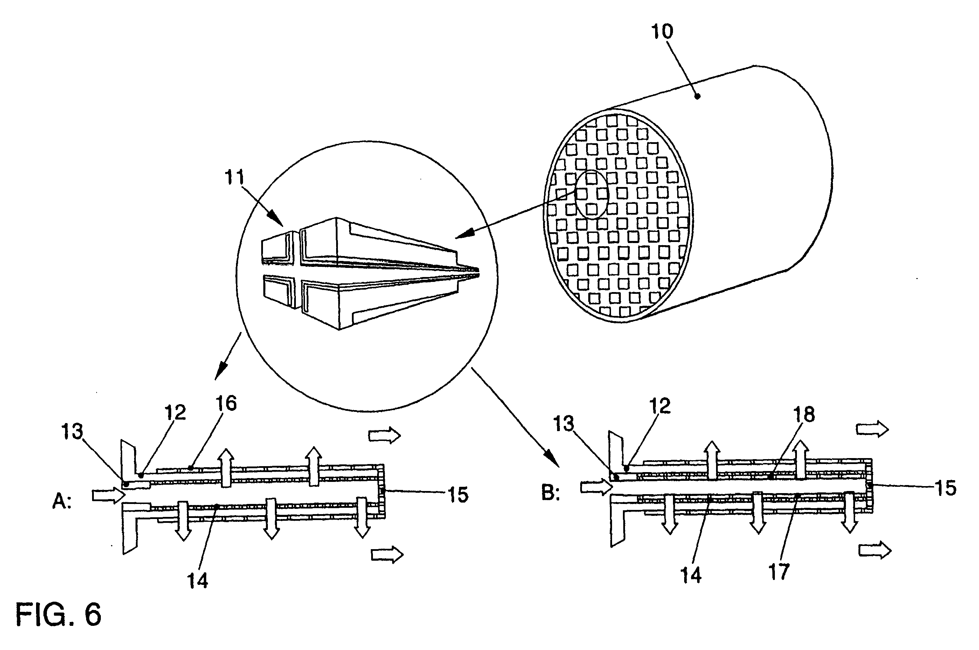

Fig. 6 zeigt in schematischer Darstellung die Integration von Ox-Katalysator und NOx-Adsorber auf dem Filter anhand zweier Beispiele A und B. Dargestellt ist ein Filter 10, bestehend aus einer Vielzahl von Filterelementen 11, die hier mit einem beispielhaften quadratischen Querschnitt dargestellt sind. Andere Querschnittsformen, beispielsweise ein rechteckigen, runder oder ovaler Querschnitt sind möglich und können entsprechend der Anforderung eingesetzt werden.

Im unteren Teil der Fig. 6 sind zwei mögliche Varianten A und B der Beschichtung eines Filterelements beispielhaft dargestellt. Eine poröse Filterwand 12, die üblichwerweise aus einem keramischen Werkstoff beschaffen ist, bildet das rohrförmige Filterelement 11, in dessen Inneres das zu reinigende Abgas eintritt, dargestellt durch einen schwarzen Pfeil. Das Abgas tritt durch die beschichtete Filterwand 12 nach außen, dargestellt durch die abknickenden Pfeile, wobei das Abgas mit dem Durchtreten durch die Filterwand 12 gereinigt wird. Das gereinigte Abgas, dargestellt durch einen weißen Pfeil, tritt dann aus dem aus Filterelementen 11 bestehenden Filter 10 aus (nicht dargestellt).

In der Variante A weist das Filterelement 11 eingangsseitig eine Platin-Beschichtung 13 auf, die auf der äußeren Eintrittsseite des Innenraums des Filterelements 11 aufgebracht ist. Ferner ist die anschließende Innenseite des Filterelements 11 mit einer NOx-Speicherbeschichtung 14 versehen. Üblicherweise ist die NOx-Speicherbeschichtung nur auf der Rohrinnenseite der Wand 12 aufgebracht, da der stirnseitige Verschluß 15 des Filterelements aus Stabilitätsgründen aus einem Stopfen einer Dicke von bis zu 20 mm besteht, während die Wanddicke des porösen Rohres ca. 1-2 mm beträgt. Bei der Verwendung eines dünneren Verschlusses 15 kann allerdings auch dieser mit einer NOx-Speicherbeschichtung versehen sein. Die Außenseite des Filterelements 11 ist mit einer 3-Wege-Beschichtung 16 versehen, so daß Abgas zuerst die Pt-Beschichtung passiert 12, dann die NOx-Speicherbeschichtung 14 und anschließend die 3-Wege-Beschichtung 16 durchströmt.

Die Variante B weist ebenfalls eingangsseitig einen Pt-Beschichtung 13 auf. Daran anschließend folgt innenseitig von innen nach außen eine NOx-Speicherbeschichtung 14 und eine innere 3-Wege-Beschichtung 17. Auf der Außenseite der porösen Wand 12 ist eine weitere NOx-Speicher-Beschichtung 18 sowie daran anschließend eine äußere 3-Wege-Beschichtung 16 aufgebracht. Auch hier ist eine beidseitige Beschichtung des Rohrverschlußes 15 möglich.

### BEZUGSZEICHENLISTE

- 1: Abgasleitung
- 2: Oxydationkatalysator
- 3: Partikelfilter
- 4: NOx-Speicherkatalysator
- 5: Strömungsrichtung
- 6: Gehäuse
- 7: Gehäuse
- 8: Gehäuse
- 9: Schwefelfalle
- 10: integrierter Ox-/NOx-Speicher-Filter
- 11: Filterelement
- 12: Wand
- 13: Pt-Beschichtung
- 14: innere NOx-Speicher-Beschichtung
- 15: Verschluß
- 16: äußere 3-Wege-Katalysator-Beschichtung
- 17: innere 3-Wege-Beschichtung
- 18: äußere NOx-Speicher-Beschichtung

## Patentansprüche

1. Vorrichtung zum Reduzieren von schädlichen Bestandteilen im Abgas einer Brennkraftmaschine, insbesondere einer Diesel-Brennkraftmaschine, mit einer Abgasleitung (1), in der in der Strömungsrichtung (5) hintereinander zunächst ein Oxydationskatalysator (2) und dann ein Partikelfilter (3) zum Filtern von im Abgas enthaltenen Partikeln angeordnet sind, wobei die Vorrichtung ferner einen NOx-Speicherkatalysator (4) aufweist, **dadurch gekennzeichnet, daß** der NOx-Speicherkatalysator (4) in den Partikelfilter (3) integriert ist und durch eine NOx-Speicher-Beschichtung (14, 18) des Partikelfilters gebildet wird, wobei der NOx-Speicherkatalysator (4) eine 3-Wege-Beschichtung aufweist.

2. Vorrichtung nach Anspruch 1, **dadurch gekennzeichnet, daß** die 3-Wege-Beschichtung in Strömungsrichtung hinter der NOx-Speicher-Beschichtung aufgebracht ist.

3. Vorrichtung nach einem der vorherigen Ansprüche, **dadurch gekennzeichnet, daß** der Oxydationskatalysator (2) in den Partikelfilter (3) integriert ist.

4. Vorrichtung nach Anspruch 3, **dadurch gekennzeichnet, daß** der Oxydationskatalysator (2) durch eine Oxydationskatalysator-Beschichtung (13) gebildet wird.

5. Vorrichtung nach Anspruch 4, **dadurch gekennzeichnet, daß** die Vorrichtung in einem gemeinsamen Filter (10) realisiert ist, der eine Vielzahl beschichteter Filterelemente (11) aufweist.

6. Vorrichtung nach Anspruch 5, **dadurch gekennzeichnet, daß** die NOx-Speicher-Beschichtung (14) einlaßseitig des Filterelements (11) angeordnet ist.

7. Vorrichtung nach einem der Ansprüche 5 oder 6, **dadurch gekennzeichnet, daß** der Partikelfilter (3) durch eine strömungsdurchlässige Wand (12) gebildet wird.

8. Vorrichtung nach Anspruch 7, **dadurch gekennzeichnet, daß** ein Filterelement (11) einlaßseitig mit einer Oxydationskatalysator-Beschichtung (13) und einer NOx-Speicher-Beschichtung (14) sowie auslaßseitig mit einer 3-Wege-Beschichtung (16) versehen ist.

9. Vorrichtung nach Anspruch 8, **dadurch gekennzeichnet, daß** einlaßseitig in Strömungsrichtung nach der NOx-Speicher-Beschichtung (14) eine 3-Wege-Beschichtung (17) angeordnet ist.

10. Vorrichtung nach Anspruch 9, **dadurch gekennzeichnet, daß** auslaßseitig in Strömungsrichtung vor der 3-Wege-Beschichtung (16) eine weitere NOx-Speicher-Beschichtung angeordnet ist.

11. Vorrichtung nach Anspruch 10, **dadurch gekennzeichnet, daß** das Filterelement (11) weitere NOx-Speicher-Beschichtungen und 3-Wege-Beschichtungen aufweist.

12. Vorrichtung nach einem der vorherigen Ansprüche, **dadurch gekennzeichnet, daß** der Vorrichtung eine Schwefel-Verminderungsvorrichtung zum Vermindern des Schwefels im Abgas zugeordnet ist, die in der Strömungsrichtung (5) dem Oxydationskatalysator (2) vorgeordnet ist.

## Claims

1. Device for reducing harmful- constituents in the exhaust gas from an internal combustion engine, in particular a diesel internal combustion engine, having an exhaust pipe (1) in which, in succession in the direction of flow (5), there are arranged firstly an oxidation catalytic converter (2) and then a particulate filter (3) for filtering particulates contained in the exhaust gas, the device also having an NOx storage catalytic converter (4), **characterized in that** the NOx storage catalytic converter (4) is integrated in the particulate filter (3) and is formed by an NOx storage coating (14, 18) of the particulate filter, the NOx storage catalytic converter (4) having a three-way coating.

2. Device according to Claim 1, **characterized in that** the three-way coating is applied downstream of the NOx storage coating, as seen in the direction of flow.

3. Device according to one of the preceding claims, **characterized in that** the oxidation catalytic converter (2) is integrated in the particulate filter (3).

4. Device according to Claim 3, **characterized in that** the oxidation catalytic converter (2) is formed by an oxidation catalyst coating (13).

5. Device according to Claim 4, **characterized in that** the device is realized in a common filter (10) which has a multiplicity of coated filter elements (11).

6. Device according to Claim 5, **characterized in that** the NOx storage coating (14) is arranged on the inlet side of the filter element (11).

7. Device according to one of Claims 5 or 6, **characterized in that** the particulate filter (3) is formed by a flow-permeable wall (12).

8. Device according to Claim 7, **characterized in that** a filter element (11) is provided on the inlet side with an oxidation catalyst coating (13) and an NOx storage coating (14) and on the outlet side with a three-way coating (16).

9. Device according to Claim 8, **characterized in that** a three-way coating (17) is arranged on the inlet side, downstream of the NOx storage coating (14), as seen in the direction of flow.

10. Device according to Claim 9, **characterized in that** a further NOx storage coating is arranged on the outlet side, upstream of the three-way coating (16), as seen in the direction of flow.

11. Device according to Claim 10, **characterized in that** the filter element (11) has further NOx storage coatings and three-way coatings.

12. Device according to one of the preceding claims, **characterized in that** the device is assigned a sulphur-lowering device for lowering the levels of sulphur in the exhaust gas, which sulphur-lowering device is arranged upstream of the oxidation catalytic converter (2), as seen in the direction of flow (5).

## Revendications

1. Dispositif destiné à réduire la quantité de composants nocifs dans les gaz d'échappement d'un moteur à combustion interne, en particulier d'un moteur à combustion interne Diesel, avec une conduite d'échappement (1) dans laquelle sont disposés, en succession dans le sens de l'écoulement (5), d'abord un catalyseur à oxydation (2) puis un filtre à particules (3) pour filtrer les particules contenues dans les gaz d'échappement, le dispositif présentant en outre un catalyseur accumulateur de NOₓ (4), **caractérisé en ce que** le catalyseur accumulateur de NOₓ (4) est intégré dans le filtre à particules (3) et est formé par un revêtement(14, 18) accumulateur de NOₓ du filtre à particules, le catalyseur accumulateur de NOₓ (4) présentant un revêtement à trois voies.

2. Dispositif selon la revendication 1, **caractérisé en ce que** le revêtement à trois voies est apposé en aval du revêtement accumulateur de NOₓ, dans le sens de l'écoulement.

3. Dispositif selon l'une quelconque des revendications précédentes, **caractérisé en ce que** le catalyseur à oxydation (2) est intégré dans le filtre à particules (3).

4. Dispositif selon la revendication 3, **caractérisé en ce que** le catalyseur à oxydation (2) est formé par un revêtement (13) formant catalyseur à oxydation.

5. Dispositif selon la revendication 4, **caractérisé en ce que** le dispositif est réalisé dans un filtre commun (10) qui présente une pluralité d'éléments filtrants revêtus (11).

6. Dispositif selon la revendication 5, **caractérisé en ce que** le revêtement (14) accumulateur de NOₓ est disposé du côté d'entrée de l'élément filtrant (11).

7. Dispositif selon la revendication 5 ou 6, **caractérisé en ce que** le filtre à particules (3) est fermé par une paroi (12) laissant passer le flux.

8. Dispositif selon la revendication 7, **caractérisé en ce qu'**un élément filtrant (11) est pourvu du côté d'entrée d'un revêtement (13) formant catalyseur à oxydation et d'un revêtement (14) accumulateur de NOₓ, et du côté de sortie d'un revêtement à trois voies (16).

9. Dispositif selon la revendication 8, **caractérisé en ce qu'**un revêtement à trois voies (17) est disposé du coté d'entrée, en aval du revêtement (14) accumulateur de NOₓ dans le sens de l'écoulement.

10. Dispositif selon la revendication 9, **caractérisé en ce qu'**un revêtement supplémentaire accumulateur de NOₓ est disposé du côté de sortie, en amont du revêtement à trois voies (16) dans le sens de l'écoulement.

11. Dispositif selon la revendication 10, **caractérisé en ce que** l'élément filtrant (11) présente des revêtements supplémentaires accumulateurs de NOₓ et des revêtements supplémentaires à trois voies.

12. Dispositif selon l'une quelconque des revendications précédentes, **caractérisé en ce qu'**au dispositif est associé un dispositif diminuant le soufre pour réduire la quantité de soufre dans les gaz d'échappement, lequel est disposé en amont du catalyseur à oxydation (2) dans le sens de l'écoulement (5).
